(19) Europäisches Patentamt
European Patent Office
Office européen des brevets

(11) **EP 2 713 181 A1**

(12) **EUROPEAN PATENT APPLICATION**

(43) Date of publication:
**02.04.2014 Bulletin 2014/14**

(51) Int Cl.:
*G01S 13/93* (2006.01) *G08G 5/04* (2006.01)

(21) Application number: **13184623.0**

(22) Date of filing: **16.09.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.09.2012 US 201261706632 P**
**21.05.2013 US 201313899298**

(71) Applicant: **Honeywell International Inc.**
**Morristown, NJ 07962-2245 (US)**

(72) Inventors:
• **Kirk, James C.**
**Morristown,**
**NJ New Jersey 07962-2245 (US)**

• **Bui, Long**
**Morristown,**
**NJ New Jersey 07962-2245 (US)**
• **Vacanti, David C.**
**Morristown,**
**NJ New Jersey 07962-2245 (US)**
• **Freeman, Catherine L.**
**Morristown,**
**NJ New Jersey 07962-2245 (US)**

(74) Representative: **Houghton, Mark Phillip**
**Patent Outsourcing Limited**
**1 King Street**
**Bakewell, Derbyshire DE45 1DZ (GB)**

(54) **Systems and methods for performing wingtip protection**

(57) In some examples, a device or system is configured to create a narrow vertical pathway of detection that permits the enforcement of a fixed "exclusion zone" that is narrow and does not widen with range. An example system located on a vehicle includes at least two vertically separated antennas that receive radar reflection signals, a processor, and an output device. The processor receives the radar reflection signals received by the antennas, determines vertical position of any obstacles identified in the radar reflection signals and determines if the obstacles are within a predefined alert zone. The output device can output an alert if any obstacle is within the alert zone. The predefined alert zone may be related to a protruding portion of the vehicle.

FIG.2

## Description

## PRIORITY CLAIM

This application claims the benefit of U.S. Provisional Application Serial No. 61/706,632, filed September 27, 2012.

## BACKGROUND

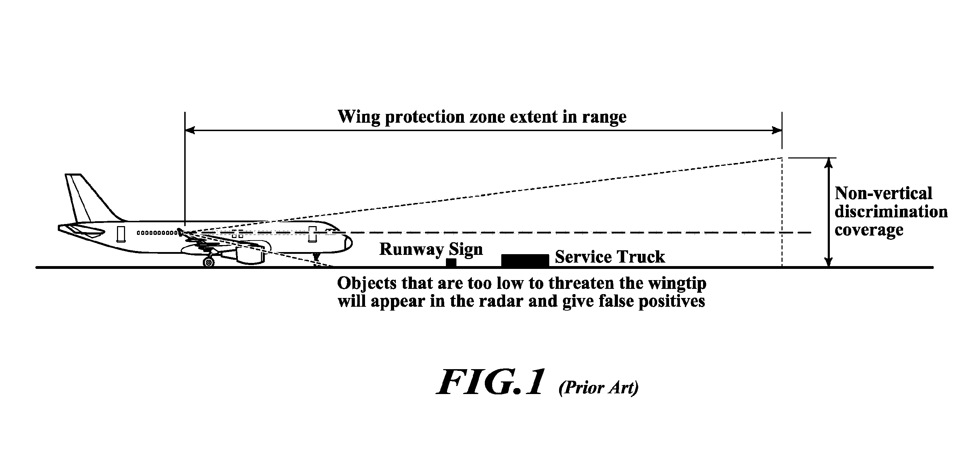

The use of radar to detect threats to the wingtips of aircraft faces the problem that, for large aircraft with wide wingspans, many features commonly found around airports, such as ground vehicles and personnel, lane markers, and runway drains, may all serve to trigger false threats when the wing, and the sensor, approach or pass over them. Anticollision systems must have very low false-alarm rates to be useful to the operators. The use of very narrow beam patterns to distinguish threats fails due to the general ratio of wing height versus range, which can be as much as 100:1, see FIGURE 1. So the ability to actually determine the height of the object, or in the case of hangar opening proscenia (the upper clearance) becomes very important.

## SUMMARY

The present invention provides systems and methods for creating a narrow vertical pathway of detection that permits the enforcement of a fixed "exclusion zone" that is narrow and does not widen with range. An advantage to this approach is that the zone or corridor does not widen with range, permitting a fixed exclusion zone that will ignore items that will pass above or below the wing.

An exemplary system located on a vehicle includes at least two vertically separated antennas that receive radar reflection signals, a processor, and an output device. The processor receives the radar reflection signals received by the antennas, determines vertical position of any obstacles identified by the radar reflection signals, and determines if the obstacles are within a predefined alert zone. The output device outputs an alert if any obstacle is within the alert zone. The predefined alert zone is related to a protruding portion of the vehicle.

In one aspect of the invention, the processor further determines the vertical position by taking a phase differential of corresponding radar reflection signals and determining vertical position based on the phase differential.

In another aspect of the invention, the protruding portion of the vehicle includes at least one of a portion of a wing or a portion of a nacelle attached to the wing.

In yet another aspect of the invention, the system includes a memory device that stores obstacle information, based on associated determined vertical position information, in a three-dimensional buffer.

In still another aspect of the invention, the predefined alert zone includes a volume of space along at least one of a projection forward of a vehicle structure or a current path of the vehicle structure.

In a further aspect of the invention, the predefined alert zone has a constant upper limit, a constant lower limit, a first distance limit, and a second distance limit, wherein the shape of the predefined alert zone is based on the vehicle structure that the predefined alert zone relates to.

## BRIEF DESCRIPTION OF THE DRAWINGS

Preferred and alternative embodiments of the present invention are described in detail below with reference to the following drawings:

FIGURE 1 is a side view of an aircraft that is implementing a wingtip collision-avoidance system according to an embodiment of the present invention;

FIGURE 2 is a schematic image of a vehicle formed in accordance with an embodiment of the present invention;

FIGURE 3 is a side view of an aircraft with a determined exclusion zone;

FIGURE 4 is a top view of the aircraft with the exclusion zone;

FIGURE 5 is graph showing representative beampatterns of a notional sensor having a two channel input used for incoming signal phase detection;

FIGURE 6 is graph showing the relative phase offset from a given target height;

FIGURE 7 is a user interface image generated by the system shown in FIGURE 2; and

FIGURES 8 and 9 are side and top views of an aircraft with a determined wing and nacelle exclusion zone.

## DETAILED DESCRIPTION OF THE INVENTION

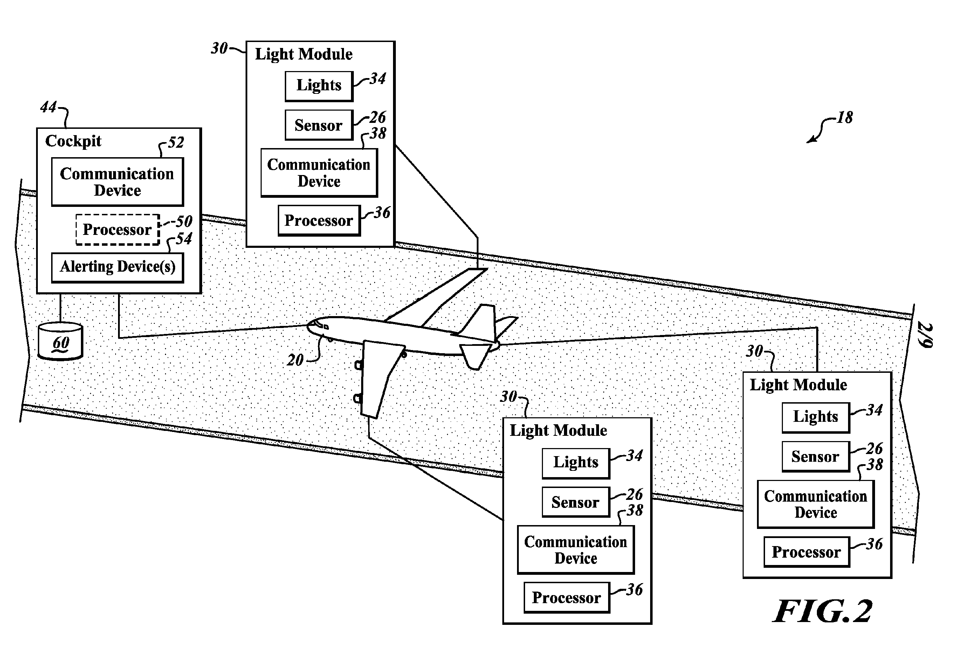

In one embodiment, as shown in FIGURE 2, an aircraft 20 includes an exemplary airport surface collision-avoidance system (ASCAS) 18. The ASCAS 18 includes horizontally and vertically discriminating radar sensors 26 included within aircraft light modules 30 or located at the other positions (e.g., vertical tail) about the aircraft 20. The light modules 30 also include navigation/position lights 34, a processor 36, and a communication device 38. The sensors 26 are in communication via the communication device 38 (wired or wirelessly) to a user interface (UI) device 44.

In one embodiment, the UI device 44 includes a processor 50 (optional), a communication device (wired or wireless) 52, and alerting device(s) 54. The UI device 44 provides audio and/or visual cues (e.g., via headphones, tablet PC, etc.) based on sensor-derived and processed information.

Based on information from the radar sensors 26, the UI device 44 provides some or all of the following functions: detect and track intruder obstacles, evaluate and prioritize threats, radar control, and declare and determine actions. Once an alert associated with a detection has been produced, then execution of a collision-avoidance action (e.g., stop the aircraft, maneuver around obstacle, etc.) is manually performed by the operator or automatically by an automated system (e.g., autobrakes).

In one embodiment, processing of the radar information is done by the processor 36 and/or the processor 50 at the UI device 44.

In one embodiment, the antennas are installed at other fuselage areas, such as above each engine or at the nose of the aircraft, etc. Even though the antennas are not at the wingtip, the reflection data (radar return data) is buffered (stored), thus allowing the image 120 to be displayed.

The information from multiple radar systems may be used to attain full coverage relative to the aircraft 20, the wingtips, nacelles, and/or other aircraft structures. In one embodiment, all radar reflection data is stored in a three-dimensional buffer referenced to the vehicle (e.g., aircraft).

The pilot is alerted aurally, visually, and/or tactilely. For example, a visual alert presented on an electronic flight bag (EFB) display shows aircraft wingtips outlined or a highlight of any obstructions. Aural alerting is through existing installed equipment, such as the interphone or other warning electronics or possibly the enhanced ground proximity warning system (EGPWS) platform.

In one embodiment, two antennas (or two antenna arrays) arranged vertically and spaced at a precise interval (e.g., $\lambda/2$ (half wavelength)). A single radar pulse is emitted from the two antennas or a third antenna. Any radar pulse returns (reflections) are received by the vertically separated antennas. The return signals are sent to the processor (36, 50) that determines vertical position of an obstacle (i.e., performs vertical discrimination) based on a determined phase differential between two corresponding received return signals.

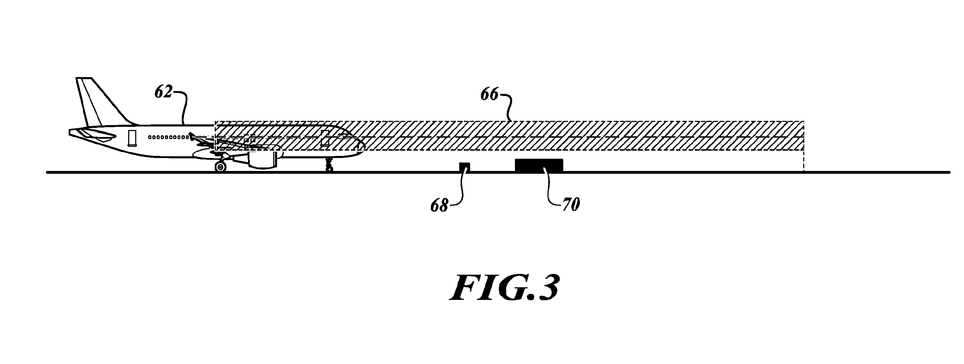

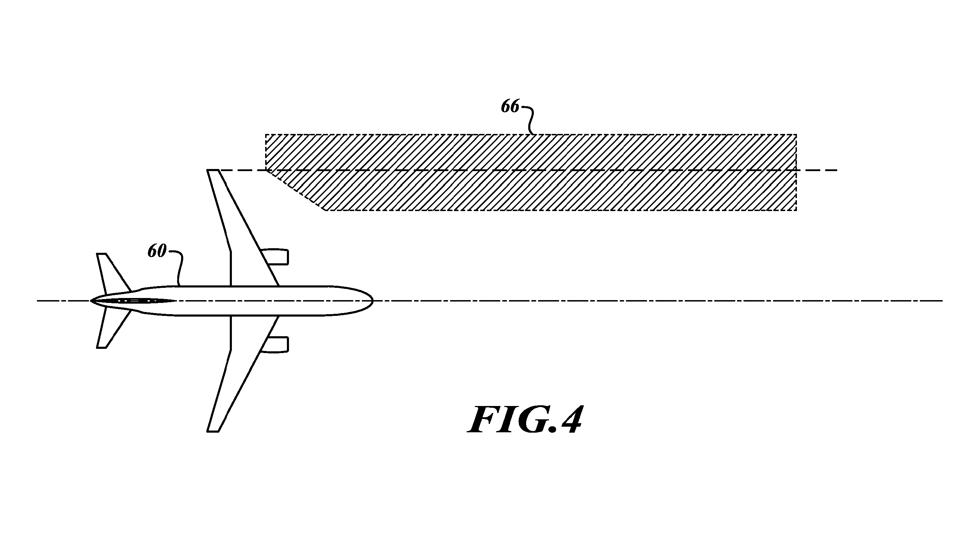

The processor (36, 50) determines horizontal and vertical information for obstacles based on the horizontal and vertical discriminations performed on the raw radar return signals. If any identified obstacles are located both horizontally and vertically within a previously defined wingtip protection zone 66 that extends forward vertically and laterally from a wingtip of an aircraft 62 - see FIGURES 3 and 4, the identified obstacle is treated as a possible threat. An alert for all threats is outputted to the operator of the aircraft 62.

The antennas can be implemented in many ways. In one embodiment, a 4 x 2 array of antenna elements allows for a four input digital beamforming algorithm to discriminate targets in the horizontal direction and a two input monopulse discrimination of targets in the vertical direction. There are many different schemes for implementing the digital beamforming and monopulse. Monopulse discrimination is implemented as a phase comparison via a simple equation:

$$\Delta z = R \frac{\Delta \phi}{2 \pi} \frac{\lambda}{d}$$

where $\lambda$ is the wavelength of the radar frequency,
$d$ is the distance between the antenna elements,
$\Delta\phi$ is the phase difference of the received signals of the two elements, in radians,
$R$ is the range to the target determined by the radar, and
$\Delta z$ is the vertical offset of the target from the antenna boresight.

The sign of the offset indicates whether the target is above or below the boresight.

In one embodiment, the processor (36, 50) stores obstacle information in a three-dimensional buffer, where the wingtip protection zone 66 includes a subset of information (i.e., cells, voxels) from the three-dimensional buffer. The phase differential is used to determine if any of the detected obstacles are in the "exclusion zone" through which the wing will travel. Objects above or below this exclusion zone may be ignored. In this example, a runway sign 68 and service truck 70 are shown in front of the aircraft 62. The runway sign 68 and service truck 70 are not considered a threat to the wing/wingtip of the aircraft 62 because the are below the wingtip protection zone 66.

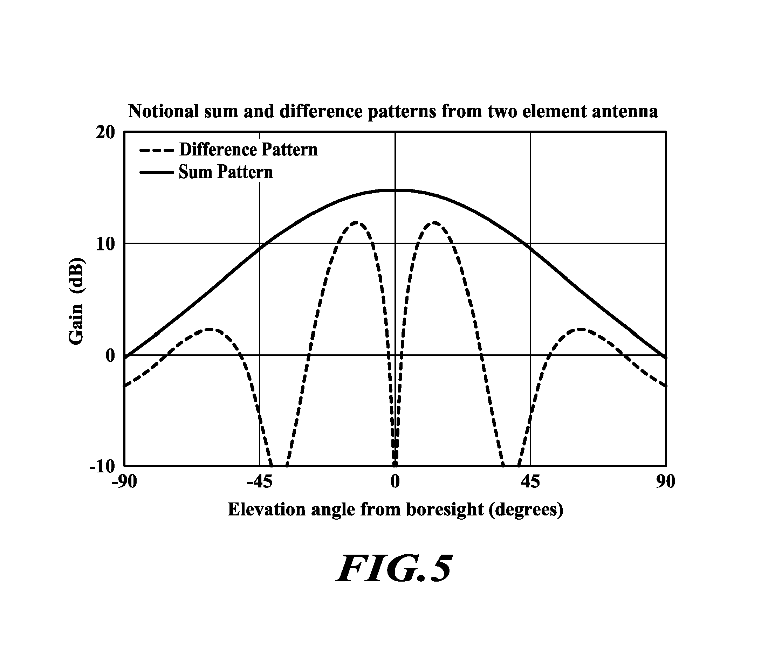

FIGURE 5 shows representative beampatterns of a notional sensor having a two channel input used for incoming signal phase detection. The use of a wide field of view sensor having the given wide pattern characteristics alone provides range capability only to a given target. The use of the dual channels, and through the use of phase comparison as described above, permits the simple sensor to perform angular location on the target and permits the determiniation of height, or in the case of proscenium signs or thresholds, the projection downward, and extent of the target.

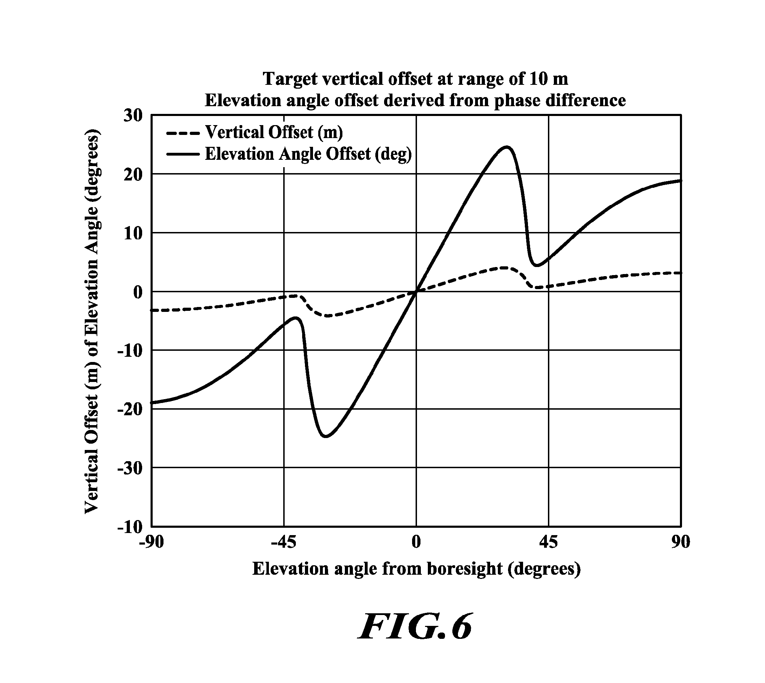

FIGURE 6 shows how the dual channel (in each plane, but the elevation is shown here) receiver can determine the vertical placement of the target via phase comparison, and that the resulting phase differentials are easily measured to provide a height to accuracies that permit the establishment of the required "safe zone" for passage of the wing and/or the nacelles.

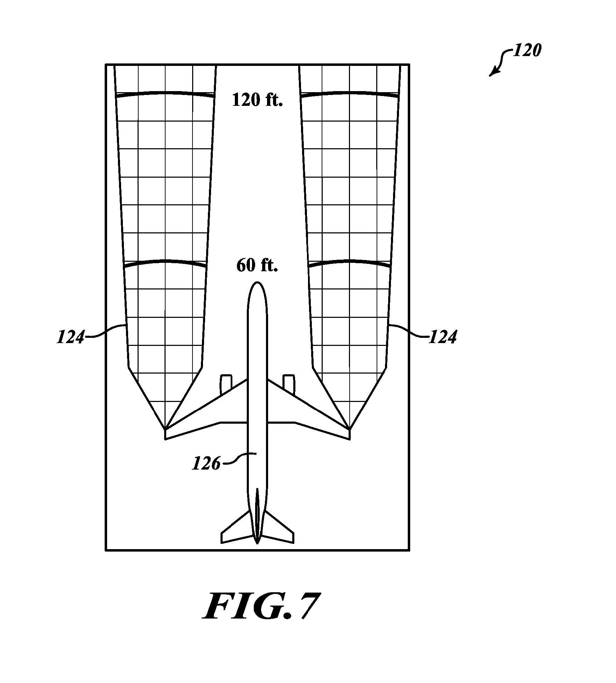

FIGURE 7 shows a top-down image 120 presented on a display that is part of the alerting device 54. The image 120 includes an ownship aircraft icon 126 with two radar beam coverage areas 124 that project forward from wingtips of the icon 126. The coverage areas 124 show only what is identified as being within the zone 66. Two range rings 132, 134 arbitrarily placed at maximum and half range are shown on the image 120 at fixed distances in front of the wing and can be scaled using either an interface on the EFB or iPad or the cursor control device (CCD) in the aircraft, when shown on a navigation display.

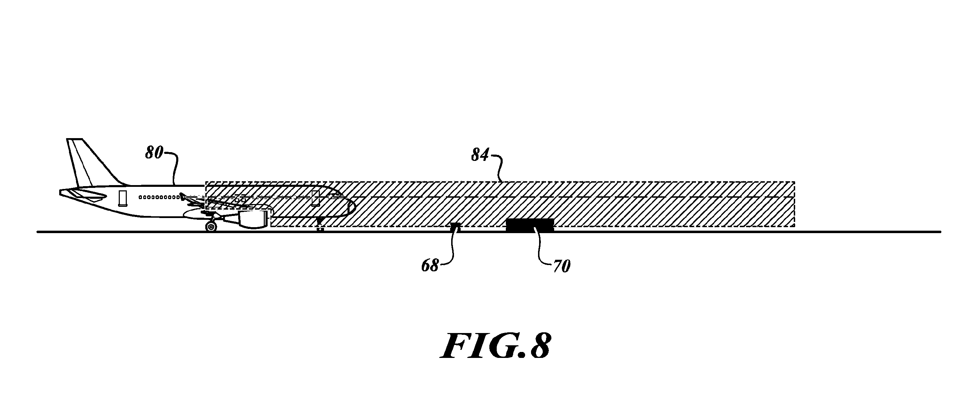

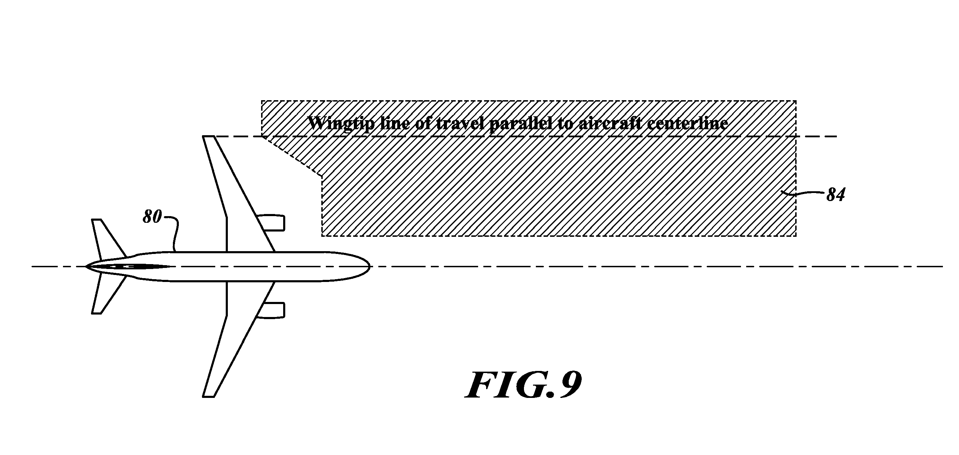

As shown in FIGURES 8 and 9, another aircraft 80 has expanded protection zones 84. The expanded protection zone 84 includes a protection volume ahead of part of the aircraft's wings and engine nacelles. The zone 84 is thicker vertically along the projected path of the below wing engine nacelles. The zone 84 may be modified to provide a protection zone around any structure that extends above or below the wing. In this example, the runway sign 68 and the service truck 70 are considered a threat to the wing/wingtip of the aircraft 62 because their corresponding radar reflection signals appear within the expanded protection zone 84.

**Claims**

1. A system located on a vehicle, the system comprising:

   at least two vertically separated antennas configured to receive radar reflection signals;
   a processor configured to:

      receive the radar reflection signals received by the at least two vertically separated antennas,
      determine vertical position of any obstacles identified in the radar reflection signals, and
      determine if the obstacles are within a predefined alert zone; and

   an output device configured to output an alert if any obstacle is within the predefined alert zone, wherein the predefined alert zone is related to a protruding portion of the vehicle and defined by whether the motion of the vehicle will result in collision with an object located therein.

2. The system of claim 1, wherein the processor is further configured to determine the vertical position by at least taking a phase differential of corresponding radar reflection signals, and determining vertical position based on the phase differential.

3. The system of claim 1, wherein the protruding portion of the vehicle comprises at least one of a portion of a wing or a portion of a nacelle attached to the wing.

4. The system of claim 1, further comprising a memory device configured to store obstacle information in a three-dimensional buffer based on associated determined vertical position information.

5. The system of claim 4, wherein the predefined alert zone comprises a volume of space along at least one of a projection forward of a vehicle structure or a current path of the vehicle structure.

6. The system of claim 5, wherein the predefined alert zone has a constant upper limit, a constant lower limit, a first distance limit and a second distance limit, wherein the shape of the predefined alert zone is based on the vehicle structure that the predefined alert zone relates to.

7. A method comprising:

   at at least two vertically separated antennas, receiving radar reflection signals;
   at a processor:

      receiving the radar reflection signals received by the at least two vertically separated antennas,
      determining vertical position of any obstacles identified in the radar reflection signals, and
      determining if the obstacles are within a predefined alert zone; and

   at an output device, outputting an alert if any obstacle is within the predefined alert zone, wherein the predefined alert zone is related to a protruding portion of the vehicle and defined by whether the motion of the vehicle will result in collision with an object located therein.

8. The method of claim 7, wherein determining the vertical position comprises:

   taking a phase differential of corresponding radar reflection signals; and
   determining vertical position based on the phase differential.

9. The method of claim 7, wherein the vehicle is an aircraft and the protruding portion of the aircraft comprises at least one of a portion of a wing or a portion of a nacelle attached to the wing.

10. The method of claim 7, further comprising storing obstacle information in a three-dimensional buffer based on associated determined vertical position information.

Wing protection zone extent in range

Non-vertical discrimination coverage

Runway Sign

Service Truck

Objects that are too low to threaten the wingtip will appear in the radar and give false positives

*FIG.1* *(Prior Art)*

EP 2 713 181 A1

30 — **Light Module**

**Lights** — 34

**Sensor** — 26 — 38

**Communication Device**

**Processor** — 36

44 — **Cockpit** — 52

**Communication Device**

**Processor** — 50 — 54

**Alerting Device(s)**

60

18

20

30 — **Light Module**

**Lights** — 34

**Sensor** — 26 — 38

**Communication Device**

**Processor** — 36

30 — **Light Module**

**Lights** — 34

**Sensor** — 26 — 38

**Communication Device**

**Processor** — 36

*FIG.2*

**FIG.3**

*FIG.4*

**Notional sum and difference patterns from two element antenna**

*FIG.5*

EP 2 713 181 A1

**Target vertical offset at range of 10 m**
**Elevation angle offset derived from phase difference**

*Vertical Offset (m) of Elevation Angle (degrees)*

Legend:
– – – Vertical Offset (m)
——— Elevation Angle Offset (deg)

*Elevation angle from boresight (degrees)*

*FIG.6*

**FIG.7**

EP 2 713 181 A1

**FIG.8**

Wingtip line of travel parallel to aircraft centerline

84

80

*FIG.9*

Europäisches
Patentamt

European
Patent Office

Office européen
des brevets

# EUROPEAN SEARCH REPORT

Application Number

EP 13 18 4623

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/174591 A1 (CORNIC PASCAL [FR] ET AL) 9 July 2009 (2009-07-09) * paragraphs [0014], [0042], [0044], [0053], [0062], [0066]; figures 1,2b, * * paragraph [0047] - paragraph [0051] * ----- | 1-10 | INV. G01S13/93 G08G5/04 |
| X | US 2006/044177 A1 (WITTENBERG PETER [US] ET AL) 2 March 2006 (2006-03-02) * paragraphs [0002], [0006], [0007], [0008], [0043]; figure 1 * ----- | 1,7 | |
| X | EP 1 923 717 A1 (MA COM INC [US] AUTOLIV ASP INC [US]) 21 May 2008 (2008-05-21) * the whole document * ----- | 1-10 | |

| | TECHNICAL FIELDS SEARCHED (IPC) |
|---|---|
| | G01S G08G |

The present search report has been drawn up for all claims

| Place of search | Date of completion of the search | Examiner |
|---|---|---|
| Munich | 15 January 2014 | Beer, Mark |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 18 4623

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2014

| Patent document cited in search report | Publication date | Patent family member(s) | Publication date |
|---|---|---|---|
| US 2009174591 A1 | 09-07-2009 | DE 102008014330 A1<br>FR 2913775 A1<br>US 2009174591 A1 | 23-10-2008<br>19-09-2008<br>09-07-2009 |
| US 2006044177 A1 | 02-03-2006 | US 2006044177 A1<br>WO 2006028877 A2 | 02-03-2006<br>16-03-2006 |
| EP 1923717 A1 | 21-05-2008 | AT 520041 T<br>EP 1923717 A1<br>JP 2008122391 A<br>US 2008111733 A1 | 15-08-2011<br>21-05-2008<br>29-05-2008<br>15-05-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 61706632 A